# EUROPÄISCHE PATENTSCHRIFT

(11) **EP 2 165 952 B1**
(45) Veröffentlichungstag und Bekanntmachung des Hinweises auf die Patenterteilung: **01.02.2012**
(21) Anmeldenummer: 08016383.5
(22) Anmeldetag: 17.09.2008
(51) Int. Cl.: B65G 59/06, B65G 59/10

(54) **Vereinzelungsvorrichtung**
Separation device
Dispositif de séparation

(43) Veröffentlichungstag der Anmeldung: 24.03.2010
(73) Patentinhaber: Ligmatech Automationssysteme GmbH, 09638 Lichtenberg (DE)
(72) Erfinder: Krieger, Mathias, 09638 Lichtenberg (DE)
(74) Vertreter: HOFFMANN EITLE

(56) Entgegenhaltungen:
- DE-A1- 3 124 450

## Beschreibung

### Technisches Gebiet

Die Erfindung betrifft eine Vereinzelungsvorrichtung zum Vereinzeln von in einem Stapel bereitgestellten Werkstücken, insbesondere von gestapelten Ladeleisten für Transportzwecke. Ferner betrifft die Erfindung eine Zufuhrvorrichtung zum Zuführen von in einem Stapel bereitgestellten Werkstücken mit einer entsprechenden Vereinzelungsvorrichtung sowie ein Verfahren zum Zuführen von in einem Stapel bereitgestellten Werkstücken.

### Stand der Technik

Transportgegenstände wie beispielsweise Transportstapel, insbesondere gestapelte, verpackte Möbelstücke bzw. verpackte Teile von Möbelstücken z.B. in Kartons, werden innerhalb einer Verarbeitungsanlage zum größten Teil über geeignete Transport- oder Fördereinrichtungen, beispielsweise über Rollenbahnen, Transportbänder oder Kettenförderer transportiert. Für den Weitertransport eines solchen Transportgegenstands außerhalb der Verarbeitungsanlage, beispielsweise zum Transport durch Züge oder LKWs wird dieser Transportgegenstand auf eine Palette oder, alternativ, auf ein Paar Ladeleisten gesetzt, was zu einem vereinfachten Hantieren des Transportgegenstands, beispielsweise beim Be- und Entladen eines Zugs oder LKWs, insbesondere durch Gabelstapler, Kräne oder ähnliche Förderfahrzeuge führt. Falls nicht Paletten, sondern Ladeleisten unter den Transportgegenstand gesetzt und dort angebracht werden, müssen diese in seitlichen Randpositionen unter dem Transportgegenstand angebracht werden. Hierzu werden die Ladeleisten dem Transportgegenstand seitlich zugeführt, während der Transportgegenstand durch einen geeigneten Mechanismus angehoben wird. Alternativ kann die Transport- oder Fördervorrichtung abgesenkt werden, so dass ein Raum zum Anbringen der Ladeleisten freigegeben wird.

Herkömmliche Ladeleisten, die als Einwegprodukte magaziniert, d.h. in gestapelter Form zur Verwendung vorliegen, müssen hierzu einzeln aus dem jeweiligen Magazin, also dem jeweiligen Stapel, entnommen und unter den Transportgegenstand befördert werden. Dabei ist es von Bedeutung, dass jeweils eine einzige Ladeleiste dem Magazin entnommen und unter dem Transportgegenstand angebracht wird.

Im Fall einer automatischen Zuführung von einzelnen Ladeleisten werden die Positionen der Ladeleisten beispielsweise durch ein entsprechendes manuelles Positionieren der Ladeleisten auf der verwendeten Zufuhrvorrichtung bestimmt. Da die Zufuhrvorrichtung üblicherweise gegenüber dem Hubmechanismus, der den Transportgegenstand zum Anbringen der Ladeleisten anhebt, eine feste Anordnung hat, sind die Positionen der Ladeleisten gegenüber dem Transportgegenstand ebenfalls weitgehend fixiert.

Aus dem Stand der Technik sind bisher keine einfachen mechanischen Vereinzelungsvorrichtungen bekannt, die dazu geeignet wären, magazinierte Ladeleisten einerseits zu vereinzeln, d.h. einzeln dem jeweiligen Magazin oder Stapel zu entnehmen, als auch die entnommenen Ladeleisten präzise gegenüber dem zu bestückenden Transportgegenstand variabel zu positionieren.

Aus der DE 31 24 450 A1 ist eine Vorrichtung zum Entnehmen und Zählen von flachen Gegenständen vom unteren Ende eines Stapels bekannt, wobei die zu entnehmenden oder zu zählenden Gegenstände in einem Zuführtrichter oder einem Zuführkanal aufgenommen sind. Dabei sind an einem unteren Ende und an zwei gegenüberliegenden Seiten des Zuführtrichters wenigstens je eine Scheibengruppe vorgesehen, die aus wenigstens zwei übereinander angeordneten, drehbaren Scheiben besteht. Die Scheiben haben symmetrisch voneinander beabstandete Arbeitszonen, die während des Drehens abwechselnd in den Zuführtrichter eingreifen und aus dem Zuführtrichter heraustreten.

### Darstellung der Erfindung

Die Aufgabe der Erfindung besteht folglich darin, eine Vereinzelungsvorrichtung des obigen technischen Gebiets zu entwickeln, die auf mechanisch einfache Weise eine sichere Vereinzelung von gestapelten Ladeleisten ermöglicht. Ferner besteht die Aufgabe der vorliegenden Erfindung darin, eine entsprechende Zufuhrvorrichtung zu schaffen, mit der die entnommenen Ladeleisten präzise unter dem zu bestückenden Transportgegenstand, beispielsweise also einem Möbelstapel, anbringbar sind.

Erfindungsgemäß weist eine Vereinzelungsvorrichtung zum Vereinzeln von in einem Stapel bereitgestellten Werkstücken, insbesondere von gestapelten Ladeleisten für Transportzwecke, eine im Wesentlichen parallel zur Stapelrichtung, bevorzugt in einem von Null verschiedenen Winkel zur Vertikalen ausgerichtete Welle und zwei auf der Welle befestigte, entlang der Welle beabstandete Stützelemente auf. Die Stützelemente sind dabei durch Drehen der Welle alternierend in eine Eingriffposition und eine Freigabeposition bringbar, so dass alternierend das äußerste oder das zweite Werkstück von außen durch eines der Stützelemente gehalten und entsprechend das äußerste Werkstück alternierend freigegeben oder gehalten wird. Es dienen Platten als Stützelemente, die eine Exzentrizität gegenüber ihrer jeweiligen Befestigungsposition auf der Welle aufweisen. Die Exzentrizität der beiden Platten auf der Welle bestimmt dabei eine Auflagefläche, mit der die Platten alternierend das äußerste oder das zweite Werkstück von außen halten. Die beiden Platten sind dabei einerseits gegenüber der Welle exzentrisch angeordnet und andererseits gegenseitig in radialer Richtung der Welle versetzt. Mit anderen Worten liegen die Mittelpunkte der Platten nicht an derselben horizontalen Position, sondern die erste Platte weist eine Exzentrizität auf der Welle auf, die durch eine Mittelpunktsposition der ersten Platte in einem radialen Abstand von der Welle und in einem ersten Winkelabschnitt der Welle zustande kommt, wogegen die zweite Platte eine Exzentrizität aufweist, die durch eine Mittelpunktsposition der zweiten Platte in einem radialen Abstand von der Welle und in einem zweiten Winkelabschnitt der Welle erzeugt wird. Die beiden Platten sind dabei bevorzugt in ihrer Größe gleich. Zumindest eine der Platten ist oval.

Durch eine derartige Konstruktion wird auf mechanisch besonders einfache Weise eine verlässliche Vereinzelungsvorrichtung zum Vereinzeln von entsprechenden Werkstücken geschaffen. Die Vereinzelungsvorrichtung bildet dabei zusätzlich auch eine Auflage und demnach.eine Halterung für die gestapelten Werkstücke, beispielsweise die Ladeleisten, und benötigt daher keine zusätzliche aufwändige Halterungsvorrichtung, welche die zu vereinzelnden Werkstücke derart hält, dass eine Vereinzelungsvorrichtung auf den Stapel der Werkstücke einwirken kann. Darüber hinaus ist die erfindungsgemäße Vereinzelungsvorrichtung platzsparend und lässt sich daher nahezu beliebig, beispielsweise in der Umgebung einer entsprechenden Hubvorrichtung für anzuhebende und mit Ladeleisten zu versehende Transportstücke, unterbringen.

Da zumindest eine der Platten oval, insbesondere kreisförmig ist, ist eine periodische Abfolge der Positionen, nämlich der Eingriffposition bzw. der Freigabeposition, der entsprechenden Platte besonders einfach möglich. Bei einer ovalen bzw. kreisförmigen Ausgestaltung der zumindest einen Platte, die exzentrisch auf der Welle gelagert ist bzw. sind, geht der Übergang von der Eingriffposition in die Freigabeposition sowie der Übergang von Freigabeposition in die Eingriffposition kontinuierlich ineinander über und schont damit die zu vereinzelnden Werkstücke. Besonders bevorzugt sind die beiden Platten dabei gleich geformt. Eine besonders bevorzugte Ausführungsform der Vereinzelungsvorrichtung umfasst dabei zwei gleich große und gleich geformte, nämlich zwei kreisförmige, Platten, die jeweils exzentrisch auf der Welle befestigt sind und deren Exzentrizitäten einander gegenüberliegen. Gegenüberliegende Exzentrizität ist in diesem Fall so zu verstehen, dass die kürzeste Verbindungslinie der beiden Mittelpunkte der beiden bevorzugt kreisförmigen aber auch andersförmiger Platten durch die Welle verläuft, auf der die Platten befestigt sind.

In einer weiteren bevorzugten Ausführungsform ist der Abstand zwischen den Platten entlang der Welle einstellbar. Auf diese Weise ist die Vereinzelungsvorrichtung auf die zu vereinzelnden Werkstücke bzw. den Stapel dieser Werkstücke anpassbar, so dass eine vielseitige Einsetzbarkeit der Vereinzelungsvorrichtung gegeben ist. So kann es beispielsweise je nach Form der in dem Stapel bereitgestellten Werkstücke, die jeweils an zumindest einer Stelle durch die Vereinzelungsvorrichtung gehalten bzw. freigegeben werden, unter Umständen erforderlich sein, dass für eine reibungslose Vereinzelung der Werkstücke ein bestimmter Abstand zwischen den Platten entlang der Welle eingehalten wird, beispielsweise weil die gestapelten Werkstücke durch ihre Form einen vorgegebenen Abstand voneinander aufweisen, auf den die Vereinzelungsvorrichtung bevorzugt einstellbar ist.

Mit Vorteil liegt die Vereinzelungsvorrichtung an einer Stirnseite eines Werkstücks, insbesondere einer Ladeleiste, an und ist eingerichtet, das anliegende Werkstück an der Stirnseite zu halten oder freizugeben. Weiter bevorzugt liegen an zwei Stirnseiten des Werkstücks, insbesondere der Ladeleiste, je eine Vereinzelungsvorrichtung an, so dass das Werkstück durch die beiden Vereinzelungsvorrichtungen besonders sicher und effizient vereinzelt werden kann. Eine Stirnseite der Ladeleiste ist dabei eine Seitenkante, die bei einer länglichen Ladeleiste, die einen im Wesentlichen rechteckigen Grundriss mit zwei unterschiedlichen Kantenlängen aufweist, an der kürzeren Kante der Ladeleiste liegt.

Der Winkel, unter dem sich die Welle gegenüber der Vertikalen erstreckt, ist, wie oben beschrieben, durch die Stapelrichtung gegeben. Die Stapelrichtung kann dabei beispielsweise durch eine schiefe Ebene oder eine entsprechend ausgerichtete Anlagefläche definiert werden, an welcher der jeweilige Stapel zur Stabilisierung anliegt. In diesem Fall ist die Welle im Wesentlichen parallel zu der schiefen Ebene bzw. Anlagefläche ausgerichtet, so dass die bevorzugt senkrecht auf der Welle befestigten Platten die an der schiefen Ebene anliegenden Werkstücke entlang ihre möglichen Verschiebungsrichtung halten. Aufgrund der Exzentrizität, mit der die Platten auf der Welle befestigt sind, verändert sich das Maß der Ausdehnung der einzelnen Platten in eine definierte, raumfeste Richtung in Abhängigkeit von der Winkelposition der Welle gegenüber der Raumrichtung. Wie oben beschrieben sind die beiden Platten dabei jeweils exzentrisch und in unterschiedliche Richtungen exzentrisch auf der Welle befestigt, so dass die verschiedenen Platten nicht parallel, d.h. im selben Winkelabschnitt, ihren größten Abstand bzw. ihren kleinsten Abstand zur Welle haben. Bevorzugt sind die Exzentrizitäten der beiden Platten um π, d.h. 180°, phasenverschoben, so dass die erste Platte ihren maximalen radialen Abstand gegenüber der Position der Welle bei einer ersten Winkelposition aufweist, wogegen die zweite Platte ihren maximalen Abstand von der Welle und damit der Drehachse in einer zweiten Winkelposition gegenüberliegend der ersten Winkelposition aufweist. In diesem Fall schneidet die kürzeste Verbindungslinie zwischen den Mittelpunkten der beiden Platten die Welle. Daneben ist es auch möglich, dass die Platten nicht genau um 180° phasenverschoben sind, sondern beispielsweise eine Phasenverschiebung von π/2, d.h. 90°, aufweisen, was jedoch nicht bevorzugt wird. Es ist insgesamt von Bedeutung, dass die beiden Platten wechselweise in radialer Richtung übereinander hinausragen, so dass in einem ersten Winkelabschnitt die erste Platte radial weiter von der Welle beabstandet ist als die zweite, wogegen in einem zweiten, anderen Winkelabschnitt die zweite Platte einen größeren radialen Abstand aufweist als die erste.

Eine erfindungsgemäße Zufuhrvorrichtung zum Zuführen von in einem Stapel bereitgestellten Werkstücken, insbesondere von gestapelten Ladeleisten für Transportzwecke, umfasst eine Vereinzelungsvorrichtung der oben beschriebenen Art und eine Entnahmevorrichtung, wobei die Entnahmevorrichtung eingerichtet ist, das äußerste Werkstück zu halten, wenn die Vereinzelungsvorrichtung in der Freigabeposition ist, d.h. wenn die äußerste Platte in der Freigabeposition ist. Die äußerste Platte ist dabei die untere Platte, falls der Werkstückstapel von der Vereinzelungsvorrichtung nach unten abgestützt wird. Im umgekehrten Fall ist die äußerste Platte die obere. Die Eingriff- bzw. Freigabeposition der Vereinzelungsvorrichtung entspricht mit anderen Worten der entsprechenden Position der äußersten Platte, also derjenigen Platte, die das äußerste Werkstück jeweils hält bzw. freigibt, wobei sich die andere Platte bevorzugt in dem jeweils anderen Zustand befindet, zumindest jedoch den Werkstückstapel halten kann, während die äußerste Platte das äußerste Werkstück freigibt. Das äußerste Werkstück kann wie beschrieben sowohl das unterste als auch das oberste Werkstück sein und wird in der Freigabeposition durch die Vereinzelungsvorrichtung freigegeben, so dass es einzeln von dem Werkstückstapel entnommen werden kann. Da die Vereinzelungsvorrichtung gleichzeitig das zweite Werkstück von außen, also beispielsweise das zweite Werkstück von unten festhält, wird verhindert, dass mehr als das äußerste Werkstück durch die Entnahmevorrichtung ergriffen wird. In einer anderen Ausführungsform kann das zweite Werkstück beispielsweise auch das zweite Werkstück von oben sein, beispielsweise dann, wenn der Werkstückstapel durch eine Federkraft nach oben gedrückt wird.

Mit Vorteil weist die Entnahmevorrichtung eine Schwenkachse und einen Schwenkarm zum Verschwenken zwischen einer Entnahmeposition und einer Beschickposition auf. Die Schwenkachse kann bevorzugt im Wesentlichen horizontal ausgerichtet sein, so dass der Schwenkarm um die horizontale Achse schwenkbar ist. Falls das zu haltende Werkstück oberhalb der Entnahmevorrichtung angeordnet ist, beispielsweise wenn die Vereinzelungsvorrichtung das jeweils unterste Werkstück des Werkstückstapels freigibt, wird bevorzugt, dass die Entnahmeposition oberhalb der Beschickposition liegt und der Schwenkarm um die Schwenkachse auf und ab schwenkbar ist. Die Entnahmeposition entspricht folglich der Position der Entnahmevorrichtung, in der die Entnahmevorrichtung eingerichtet ist, das jeweils äußerste Werkstück des Werkstückstapels zu entnehmen, wogegen die Beschickposition diejenige Position der Entnahmevorrichtung ist, in der sich das entnommene Werkstück, insbesondere die Ladeleiste, an seinem geplanten Ort, insbesondere unterhalb des Transportgegenstands, der zu beschicken ist, befindet.

In einer weiteren bevorzugten Ausführungsform umfasst die Entnahmevorrichtung einen motorischen Antrieb, bevorzugt einen Kurbeltrieb zum Verschwenken des Schwenkarms. Der motorische Antrieb kann dabei bevorzugt auch mit der Vereinzelungsvorrichtung gekoppelt sein, so dass die Vereinzelungsvorrichtung synchron mit der Entnahmevorrichtung bewegbar ist, beispielsweise dann in die Freigabeposition gebracht wird, wenn sich die Entnahmevorrichtung in der Entnahmeposition befindet und sich in der Eingriffposition befindet, wenn die Entnahmevorrichtung in der Beschickposition ist.

Mit Vorteil weist die Entnahmevorrichtung ein Entnahmeelement, bevorzugt in der Form eines Saugers und/oder eines Greifers auf. Durch ein solches Entnahmeelement kann die Entnahmevorrichtung das zu ergreifende Werkstück besonders sicher halten und auch wieder lösen. Je nach Form des zu ergreifenden Werkstücks lassen sich grundsätzlich alle aus dem Stand der Technik verfügbaren Sauger bzw. Greifer für die erfindungsgemäße Entnahmevorrichtung einsetzen. Daneben sind auch andere Entnahmeelemente, beispielsweise Magnetelemente grundsätzlich realisierbar

Mit Vorteil weist die Entnahmevorrichtung eine erste Linearführung und bevorzugt eine zweite Linearführung auf, wobei die erste Linearführung in einer Beschickungsrichtung und bevorzugt die zweite Linearführung in einer im Wesentlichen senkrecht zur Beschickungsrichtung verlaufenden Richtung verfahrbar ist. Die Beschickungsrichtung verläuft dabei im Wesentlichen von der Position des Stapels der Werkstücke, insbesondere der Ladeleisten, in Richtung des Zielorts des Werkstücks, beispielsweise in Richtung des zu beschickenden Transportgegenstands. Die Zufuhrvorrichtung zum Zuführen der Werkstücke bewegen kann sich in dieser Richtung entlang der Linearführung bewegen. Die bevorzugte zweite Linearführung lässt sich dabei im Wesentlichen senkrecht bzw. quer zur Beschickungsrichtung verfahren, wobei vorzugsweise drei vordefinierte Positionen, die sich beispielsweise nach der Anordnung und den Dimensionen des zu beschickenden Transportgegenstands richten, gezielt angefahren werden können.

Die Verfahrbarkeit der Linearführungen ist dabei insbesondere so eingerichtet, dass in Beschickungsrichtung ein Rand des schmalsten zu verarbeitenden Transportgegenstandes durch eine Ladeleiste sicher erreicht wird und quer zur Beschickungsrichtung alle üblichen Lagenbilder von Ladeleisten, beispielsweise zur Anbringung unter einem Stapel verpackter Möbelstücke, realisiert werden können. Die Lagenbilder richten sich dabei insbesondere nach der Größe des Transportgegenstands, beispielsweise also der gestapelten verpackten Möbelstücke, sowie nach dessen Gewicht und dem weiteren geplanten Transportweg. Hierbei kann es auch vorkommen, dass an einer Seite des Transportgegenstands zwei separate Ladeleisten hintereinander angebracht werden und darüber hinaus, dass zwischen hintereinander an einer Seite des Transportgegenstands angebrachten Ladeleisten eine variable Lücke besteht.

In einer weiteren bevorzugten Ausführungsform weist die Zufuhrvorrichtung eine Sensoreinrichtung auf, die zur Bestimmung einer Position des Werkstücks, insbesondere einer Endposition des Werkstücks eingerichtet ist. Die Endposition entspricht dabei der Beschickungsposition des Werkstücks und ist folglich die Position, in der das Werkstück, beispielsweise also die Ladeleiste, an seinem bzw. ihrem vorbestimmten Ort angelangt ist. Im Falle einer Ladeleiste, die unter einem Transportgegenstand anzubringen ist, ist die Endposition die Beschickungsposition und befindet sich unterhalb des zu beschickenden Transportgegenstands, wobei die Ladeleiste beispielsweise auch einen seitlichen Anschlag aufweisen kann, der bei einem Beschicken des Transportgegenstands mit der Ladeleiste gegen den Transportgegenstand anschlägt und damit eine definierte Endposition der Ladeleiste in Beschickungsrichtung festlegt. Da das Werkstück, insbesondere die Ladeleiste, bevorzugt pneumatisch verfahren werden kann, lässt sich diese Endposition beispielsweise durch einen Anstieg des pneumatischen Drucks mit Hilfe einer Sensoreinrichtung bestimmen.

Bei einem erfindungsgemäßen Verfahren zum Zuführen von in einem Stapel bereitgestellten Werkstücken, insbesondere von gestapelten Ladeleisten, zu einem zu transportierenden Gegenstand unter Verwendung einer Zufuhrvorrichtung, wie sie oben beschrieben wurde, wird ein äußerstes Werkstück des Stapels zunächst durch die Vereinzelungsvorrichtung vereinzelt und das vereinzelte Werkstück anschließend durch die Entnahmevorrichtung gehalten.

Bevorzugt wird das äußerste Werkstück des Stapels durch Drehen der Vereinzelungsvorrichtung um ihre Welle vereinzelt und der übrige Stapel durch die Vereinzelungsvorrichtung gehalten. Auf diese Weise ist eine besonders effiziente Vereinzelung eines Werkstücks aus dem Stapel möglich, wobei der Stapel gleichzeitig durch die Vereinzelungsvorrichtung gehalten werden kann.

Weiter bevorzugt wird das vereinzelte Werkstück von der Entnahmevorrichtung in einer ersten Richtung um eine erste Strecke verfahren und insbesondere in einer zweiten Richtung um eine zweite Strecke verfahren. Bei der ersten Richtung handelt es sich bevorzugt um die Beschickungsrichtung, wobei die zweite Richtung bevorzugt quer zur Beschickungsrichtung verläuft. Die Strecke, um die das Werkstück durch die Entnahmevorrichtung verfahren wird, richtet sich dabei, wie oben beschrieben, nach der Position und Dimension des Transportgegenstands.

Weiter bevorzugt wird die Entnahmevorrichtung vor der Vereinzelung des äußersten Werkstücks in eine Entnahmeposition zum Halten eines äußersten vereinzelten Werkstücks verfahren. Bevorzugt wird die Entnahmevorrichtung dabei auch nach der Beschickung in die Entnahmeposition verfahren, um einen periodischen, sich wiederholenden Arbeitszyklus zu bilden. Das Verfahren der Entnahmevorrichtung kann dabei bevorzugt mit der Vereinzelungsvorrichtung derart synchronisiert sein, dass parallel zu dem Verfahren der Vereinzelungsvorrichtung in die Freigabeposition das Verfahren der Entnahmevorrichtung in die Entnahmeposition stattfindet.

Bevorzugt wird die Vereinzelungsvorrichtung nach dem Vereinzeln des äußersten Werkstücks weiter gedreht, um die Eingriffposition der Vereinzelungsvorrichtung, d.h. der äußersten Platte wieder herzustellen. Das Vereinzeln erfolgt, wie oben beschrieben, in der Freigabeposition der Vereinzelungsvorrichtung, wobei das äußerste Werkstück in dieser Position freigegeben ist und durch die Entnahmevorrichtung entnommen, in die Beschickposition verschwenkt und in der Beschickungsrichtung verfahren werden kann. In dieser Position hält die Vereinzelungsvorrichtung das bisher zweitäußerste Werkstück und bevorzugt alle folgenden, beispielsweise darauf liegenden. Um eine weitere Vereinzelung vorzunehmen, wird die Vereinzelungsvorrichtung jedoch wieder in die Eingriffposition verfahren, in der das äußerste Werkstück gehalten wird und die Vereinzelungsvorrichtung eingerichtet ist, das äußerste Werkstück freizugeben und das zweitäußerste Werkstück gleichzeitig zu halten.

Es wird also eine Vereinzelungsvorrichtung, eine Zufuhrvorrichtung sowie ein Verfahren geschaffen, wodurch gestapelte oder magazinierte Werkstücke, insbesondere Ladeleisten mit einfachen mechanischen Mitteln vereinzelt und ein Transportgegenstand mit den Werkstücken, beispielsweise den Ladeleisten beschickt werden kann.

Aus der nachfolgenden Figurenbeschreibung sowie der Gesamtheit der Ansprüche ergeben sich weitere bevorzugte Ausführungsformen.

### Kurze Figurenbeschreibung

- Fig. 1: zeigt eine Ladeleiste als Beispiel eines in einem Stapel bereitgestellten Werkstücks zur Vereinzelung durch die Vereinzelungsvorrichtung;
- Fig. 2a: zeigt einen Transportstapel auf zwei Ladeleisten;
- Fig. 2b: zeigt einen anderen Transportstapel auf Ladeleisten,
- Figuren 3a-3f: zeigen die Vereinzelungsvorrichtung in einer Draufsicht;
- Figuren 4a-4f: zeigen die Vereinzelungsvorrichtung in einer längsseitigen Seitenansicht jeweils in den Situationen, die den in Fig. 3a-3f gezeigten entsprechen; und
- Figuren 5a-5f: zeigen die Entnahmevorrichtung in einer stirnseitigen Seitenansicht in den Situationen, die den in Figuren 3a-3f und 4a-4f entsprechen.

### Wege zur Ausführung der Erfindung

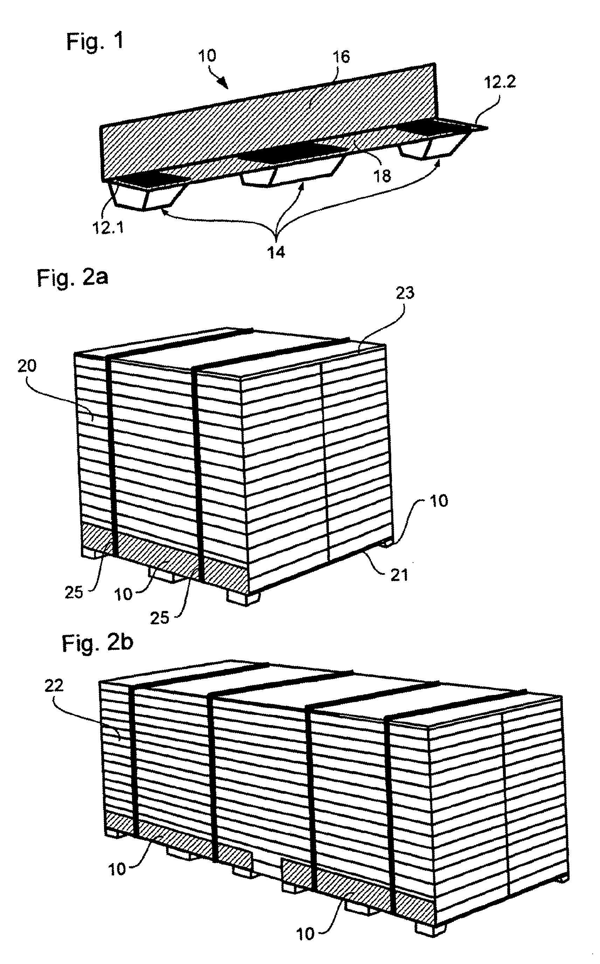

Fig. 1 zeigt eine Ladeleiste 10 als ein Beispiel für ein in einem Stapel bereitgestelltes Werkstück, das durch die erfindungsgemäße Vereinzelungsvorrichtung zu vereinzeln ist. Die Ladeleiste 10 ist in einer Seitenansicht im Wesentlichen L-förmig ausgeführt, wobei ein im Wesentlichen vertikal ausgerichteter erster Schenkel 16 und ein im Wesentlich horizontal ausgerichteter Schenkel 18 die L-Form der Ladeleiste 10 bilden. Der Winkel zwischen den beiden Schenkeln der L-förmigen Ladeleiste ist dabei bevorzugt etwas kleiner als 90°, beispielsweise 85°-88° und nachgiebig, so dass eine Vorspannung erzeugt werden kann, wenn die Ladeleiste an eine rechtwinklige Kante angelegt wird.

Fig. 1 zeigt die Ladeleiste 10 in einer perspektivischen Vorderansicht, bei der die Ladeleiste 10 so dargestellt ist, dass der im Wesentlichen horizontal ausgerichtete Schenkel 18 mit drei Auflageflächen 14 abgebildet ist, auf denen die Ladeleiste 10 und der durch die Ladeleiste 10 gehaltene Transportgegenstand auf dem Untergrund sicher stehen. Die beiden die Schenkel der Ladeleiste 10 bildenden Flächen 16, 18 weisen jeweils gemeinsame Stirnseiten 12.1, 12.2 auf, die in Fig. 1 als linkes bzw. rechtes Ende der Ladeleiste 10 angeordnet sind. Die Auflagen 14 der Fläche 18 sind bevorzugt gleichmäßig voneinander beabstandet und eignen sich dazu, einen Freiraum zwischen dem zu transportierenden Gegenstand und dem Boden, auf dem die Ladeleiste 10 zu stehen kommt, freizuhalten, in den beispielsweise eine Transportgabel eines Gabelstaplers oder ein Greifwerkzeug eines Krans hineingreifen kann. Auf diese Weise vereinfacht die Ladeleiste 10 den Transport eines Transportgegenstands bzw. dessen Hantieren durch Flurförderfahrzeuge.

Fig. 2a zeigt einen Transportstapel 20, der auf zwei Ladeleisten 10 aufgelegt ist. Der Transportstapel 20 besteht in der in Fig. 2a gezeigten, beispielhaften Ausführungsform aus zwei nebeneinander auf einer Transportplatte 21 angeordneten Plattenstapeln, die sowohl an ihrer unteren Auflagefläche als auch an ihrer oberen Fläche mit einer Schutzplatte 21, 23 gegen äußere Einflüsse geschützt sind. Die Schutzplatten 21, 23 werden dabei mit zwei parallel verlaufenden Verpackungsbändern 25 fest mit den Ladeleisten 10 verbunden, so dass der Transportstapel 20 gut zu transportieren ist.

Fig. 2b zeigt einen Transportstapel 22, der verglichen mit dem Transportstapel 20 aus Fig. 2a eine etwa dreimal so große Länge aufweist. Aus diesem Grund befindet sich der Transportstapel 22 in der in Fig. 2b ebenfalls beispielhaft gezeigten Ausführungsform auf mehr als zwei Ladeleisten 10, nämlich auf jeweils zwei Ladeleisten 10 pro Seite, d.h. insgesamt vier Ladeleisten 10. Jedes Paar Ladeleisten 10 ist dabei analog zu der in Fig. 2a dargestellten Ausführungsform an dem Transportstapel 22 befestigt und der Transportstapel 22 ist auch analog zu der in Fig. 2a gezeigten Ausführungsform gegen äußere Einwirkungen geschützt.

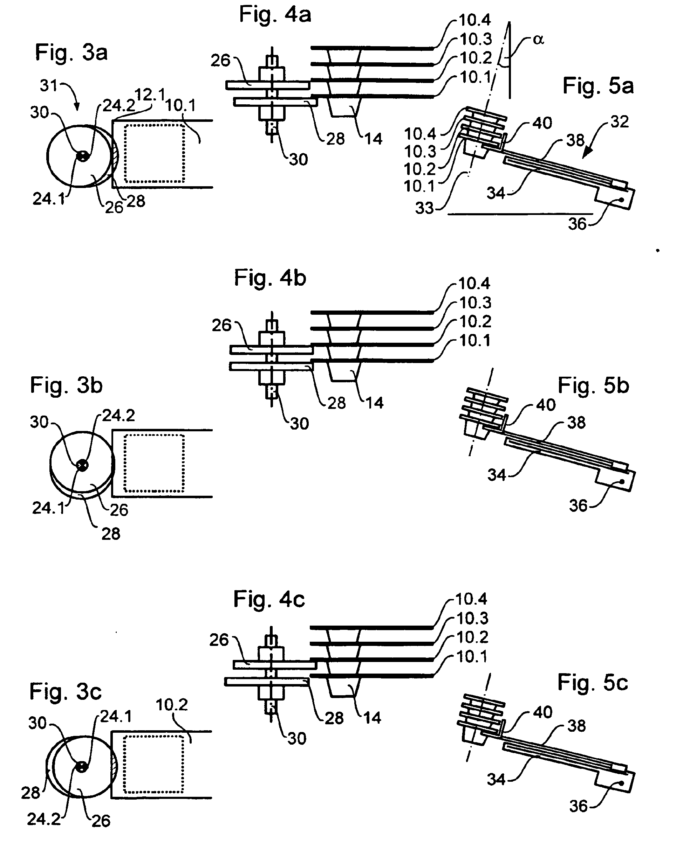

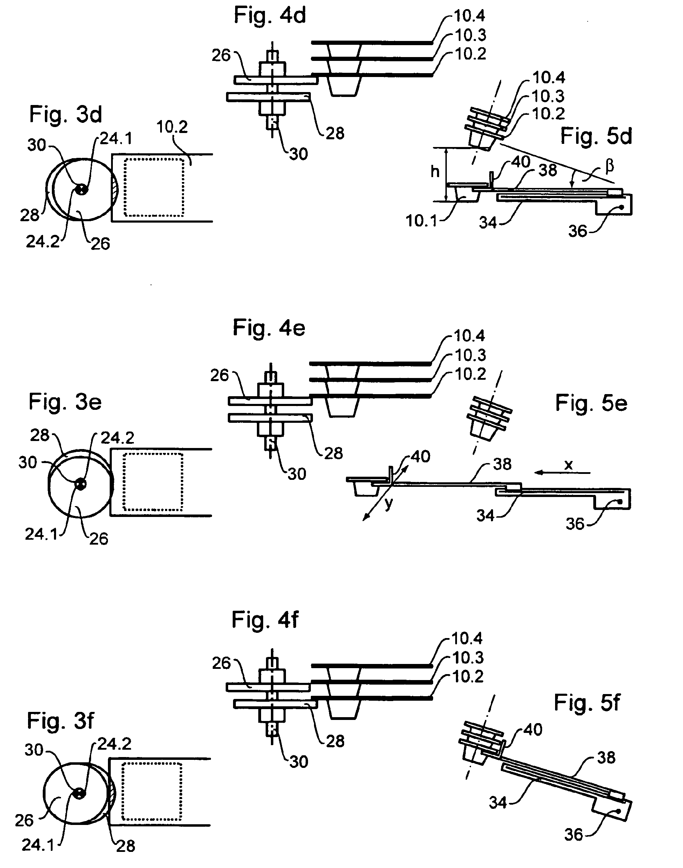

Figuren 3a und 4a zeigen eine Vereinzelungsvorrichtung zum Vereinzeln von Ladeleisten 10.1 bis 10.4, wobei Fig. 3a die Vereinzelungsvorrichtung in einer Draufsicht zeigt und Fig. 4a eine Seitenansicht der Vereinzelungsvorrichtung mit einem Stapel von Ladeleisten darstellt. Fig. 5 zeigt dabei jeweils analoge Einstellungen der Entnahmevorrichtung 32, die den gezeigten Situationen aus den Figuren 3 und 4 jeweils entsprechen. D.h., dass die Figuren 3a, 4a und 5a jeweils dieselbe Situation der Zufuhrvorrichtung zeigen. Dasselbe gilt jeweils analog für die Figuren b bis f.

Die Draufsicht der Vereinzelungsvorrichtung, die in Fig. 3a dargestellt ist, zeigt zwei Platten 26, 28, die in dieser Ausführungsform als kreisrunde Scheiben ausgeführt sind. Die jeweiligen Mittelpunkte 24.1, 24.2 der Platten 26, 28 sind dabei exzentrisch gegenüber einer gemeinsamen Welle 30 angeordnet, so dass die beiden Platten 26, 28 an zwei gegenüberliegenden Seiten jeweils über die anderen Platte 28, 26 hinausragen. Die Platten 26, 28 sind dabei im Wesentlichen parallel zu den Ladeleisten 10.1 bis 10.4 angeordnet, von denen in Fig. 3a nur die Ladeleiste 10.1 dargestellt ist. Die Ladeleiste 10.1 liegt in der in Fig. 3a dargestellten Situation auf der Platte 28 an ihrer Stirnseite 12.1 auf. Durch die exzentrische Anbringung der Platte 28 auf der Welle 30 ist der Randbereich der Platte 28 in der in Fig. 3a dargestellten Situation in Richtung der Ladeleiste 10.1 radial verschoben, so dass eine Auflagefläche a, auf der die Ladeleiste 10.1 aufliegt, eine maximale Größe erreicht und die Ladeleiste 10.1 einzig von der Platte 28 gehalten wird. Fig. 4a zeigt dieselbe Situation aus der Fig. 3a in einer Seitenansicht. In dieser Seitenansicht sind die gestapelten Ladeleisten 10.1 bis 10.4 im rechten Teil der Figur angeordnet. Im linken Teil der Figur ist die vertikal eingezeichnete Welle 30 sowie die beiden Platten 26, 28 dargestellt. Die Platte 28 befindet sich dabei unterhalb der Platte 26 und hält in der in den Fig. 3a und 4a dargestellten Situation die unterste Ladeleiste 10.1 gegen ein Herabgleiten. Die darüber liegenden Ladeleisten 10.2 bis 10.4 werden durch die Ladeleiste 10.1 indirekt ebenfalls gehalten. Wie in Fig. 4a zu sehen ist, greift die Platte 28 unter einen stirnseitigen Vorsprung der Ladeleiste 10.1, der in stirnseitiger Richtung neben einer Auswölbung einer Auflage 14 liegt.

Fig. 5a zeigt eine andere Seitenansicht der Situation, die in Fig. 3a und 4a dargestellt ist. Die in Fig. 5a dargestellte Figur stellt die Situation aus einer Perspektive einer Stirnseite der Ladeleisten 10.1 bis 10.4 dar. Es ist zu erkennen, dass die Stapelrichtung 33 der Ladeleisten um einen Winkel α gegenüber der Vertikalen verschwenkt ist. Entlang der Stapelrichtung 33 sind die Ladeleisten 10.1 bis 10.4 aufeinander gestapelt und werden bevorzugt von einer Führung in dieser Richtung gehalten. Parallel zur Stapelrichtung 33 ist auch die Welle 30 der in Figuren 3 und 4 dargestellten Vereinzelungsvorrichtung ausgerichtet. Die Entnahmevorrichtung 32, die in Fig. 5a dargestellt ist, umfasst einen Schwenkarm 34, der um eine horizontal verlaufende Achse 36 schwenkbar ist. Auf dem Schwenkarm 34 befindet sich ein in Richtung des Schwenkarms verfahrbares Armelement 38 und an dem Armelement 38 befindet sich eine Saugvorrichtung 40, welche die unterste Ladeleiste 10.1 durch Ansaugen fixiert. Der Schwenkarm 34 ist in der in Fig. 5a dargestellten Situation um einen Winkel β gegenüber der Horizontalen verschwenkt, der im Wesentlichen dem Winkel α entspricht, so dass der Schwenkarm 34 im Wesentlichen senkrecht zur Stapelrichtung 33 ausgerichtet ist.

Figuren 3b, 4b und 5b entsprechen den Ansichten der Figuren 3a, 4a und 5a. Die Figuren 3b, 4b und 5b zeigen dabei die Vereinzelungsvorrichtung in einer um etwa 90° im Uhrzeigersinn um die Welle 30 rotierten Position, in der die exzentrisch auf der Welle 30 gelagerten Mittelpunkte 24.1, 24.2 der Platten 26, 28 nicht wie in Fig. 3a gezeigt auf einer Senkrechten zur Stirnseite 12.1 der Ladeleiste 10.1 ausgerichtet sind. Vielmehr sind die Zentren 24.1, 24.2 auf einer Parallelen zur Stirnseite 12.1 der Ladeleiste 10.1 angeordnet. Dadurch verschiebt sich die Auflagefläche a, auf der die Ladeleiste 10.1 in der in Fig. 3a gezeigten Situation auflag, von der Kontaktstelle zwischen der Vereinzelungsvorrichtung und der Ladeleiste 10.1 weg. Fig. 3b zeigt eine Situation, in der die Ladeleiste 10.1 auf der unteren Platte 28 und die Ladeleiste 10.2 auf der oberen Platte 26 auf einer kleinen Auflagefläche gehalten sind.

Fig. 4b zeigt die in Fig. 3b dargestellte Situation in der Seitenansicht und zeigt deutlich, dass die Platten 26, 28 jeweils eine Ladeleiste 10.2, 10.1 halten. Die Platten 26, 28 sind dabei derart entlang der Welle 30 positionierbar, dass ein Abstand b zwischen den Platten 26, 28 einem Abstand der Auflageflächen der Ladeleisten 10.1, 10.2 entspricht. Fig. 5b zeigt die entsprechende Einstellung der Entnahmevorrichtung 32, die mit der in Fig. 5a dargestellten übereinstimmt.

Fig. 3c zeigt die Vereinzelungsvorrichtung in einer weiter um 90° im Uhrzeigersinn gedrehten Situation, so dass die obere Platte 26 in einer Eingriffposition ist, so dass sie die Ladeleiste 10.2 auf einer relativ großen Auflagefläche hält, wogegen die untere Platte 28 in einer Freigabeposition ist, durch welche die unterste Ladeleiste 10.1 freigegeben wird und nach unten abnehmbar ist. Die Stellung der Vereinzelungsvorrichtung ist gegenüber der in Fig. 3a bzw. 4a dargestellten Situation um eine halbe Umdrehung, d.h. 180° verschoben und dadurch die jeweilige Eingriff- und Freigabeposition der Platten 26, 28 vertauscht. Fig. 5c zeigt dabei wieder die entsprechende Einstellung der Entnahmevorrichtung 32, die denen aus Figuren 5a und 5b entspricht, wobei jedoch die Saugvorrichtung 40 aufgrund der Freigabeposition der unteren Platte 28 nun die Ladeleiste 10.1 festhält.

Fig. 3d zeigt dieselbe Einstellung der Vereinzelungsvorrichtung wie Fig. 3c. In Fig. 4d ist jedoch zu sehen, dass die unterste Ladeleiste 10.1 aus Fig. 4c entfernt ist und die verbliebenen Ladeleisten 10.2 bis 10.4 durch die obere Platte 26 gehalten werden. Diese Einstellung der Vereinzelungsvorrichtung entspricht also der Freigabeposition der Vereinzelungsvorrichtung, in der die ursprünglich äußerste Ladeleiste 10.1 durch die untere Platte 28 freigegeben und die ursprünglich zweitäußerste Ladeleiste 10.2 durch die obere Platte 26 gehalten wird. Fig. 5d zeigt die Entnahmevorrichtung 32, welche die unterste Ladeleiste 10.1 hält und um die Schwenkachse 36 um den Winkel β nach unten, d.h. in eine im Wesentlichen horizontal ausgerichtete Ausrichtung verschwenkt ist. Die restlichen Ladeleisten 10.2 bis 10.4 werden, wie aus den Fig. 3d und 4d deutlich wird, durch die Vereinzelungsvorrichtung, nämlich die obere Platte 26 gehalten und die Entnahmevorrichtung 32 ermöglicht das Zuführen der bis dahin untersten Ladeleiste 10.1 in eine Beschickposition, beispielsweise also zu einem zu beschickenden Transportgegenstand.

Fig. 3e zeigt die Vereinzelungsvorrichtung in einer gegenüber der Position aus den Figuren 3c und 3d um weitere 90° im Uhrzeigesinn gedrehten Position. Dies führt dazu, dass sich die Auflagefläche, auf der die nun unterste Ladeleiste 10.2 auf der oberen Platte 26 der Vereinzelungsvorrichtung aufliegt, verkleinert, wobei gleichzeitig jedoch die untere Platte 28 in Richtung ihrer Eingriffposition verfahren wird. Fig. 4e zeigt in der Seitenansicht, dass die jetzt unterste Ladeleiste 10.2 noch auf der oberen Platte 26 der Vereinzelungsvorrichtung aufliegt.

In Fig. 5e ist zu sehen, wie das Armelement 38 gegenüber dem Schwenkarm 34 verschoben und die auf dem Saugelement 40 gehaltene Ladeleiste 10.1 auf diese Weise positioniert wird. Das Armelement 38 ist dabei entlang der Ausrichtung des Schwenkarms 34, nämlich in X-Richtung, verschiebbar. Bevorzugt ist die Ladeleiste 10.1 auf dem Saugelement 40 darüber hinaus senkrecht zur X-Richtung, nämlich in der im Wesentlichen entlang der Längsrichtung der Ladeleiste 10.1 (Y-Richtung) verschiebbar, um die Ladeleiste 10.1 auf dem Saugelement 40 auch in dieser Richtung unter einem Transportgegenstand zu positionieren.

Fig. 3f zeigt die Vereinzelungsvorrichtung in einer gegenüber der in Fig. 3e gezeigten Position um weitere 90° im Uhrzeigersinn rotierten, der in Fig. 3a dargestellten Position entsprechenden Position. In dieser Position ist die obere Platte 26 wieder in ihrer Freigabeposition, also außer Eingriff mit der Ladeleiste 10.2, die nun die unterste Ladeleiste darstellt, wobei jedoch wieder die untere Platte 28 in Eingriff mit der Ladeleiste 10.2 ist und die Ladeleiste 10.2 sowie die übrigen gestapelten Ladeleisten 10.3 und 10.4 auf diese Weise hält. Damit befindet sich die Vereinzelungsvorrichtung in der in Fig. 3f gezeigten Situation wieder in ihrer Eingriffposition, so dass der Vereinzelungsvorgang beendet und ein weiterer Vereinzelungsvorgang eingeleitet werden kann. Fig. 4f zeigt entsprechend in der Seitenansicht die Situation analog zur Situation aus Fig. 4a. Auch Fig. 5f entspricht der Fig. 5a, denn der Schwenkarm 34 ist in seine dort gezeigte Ursprungsposition zurückgefahren, indem das Armelement 38 in X-Richtung zurückgefahren und der Schwenkarm 34 um den Winkel β nach oben geschwenkt wurde. Eine eventuelle Verschiebung des Saugelements 40 in Y-Richtung ist in der in Fig. 5f gezeigten Situation ebenfalls rückgängig gemacht, was hier jedoch nicht zu erkennen ist.

## Patentansprüche

1. Vereinzelungsvorrichtung (31) zum Vereinzeln von in einem Stapel bereitgestellten Werkstücken (10.1-10.4), wobei die Vereinzelungsvorrichtung eine im Wesentlichen parallel zur Stapelrichtung (33) ausgerichtete Welle (30) und zwei auf der Welle (30) befestigte, entlang der Welle (30) beabstandete Platten (26, 28) aufweist, wobei die Platten (26, 28) durch Drehen der Welle (30) alternierend in eine Eingriffposition und eine Freigabeposition bringbar sind, so dass alternierend das äußerste (10.1) oder das zweite Werkstück (10.2) von außen durch eine der Platten (26, 28) gehalten und entsprechend das äußerste Werkstück (10.1) alternierend freigegeben oder gehalten ist,
**dadurch gekennzeichnet, dass** die Welle in einem von Null verschiedenen Winkel (α) zur Vertikalen ausgerichtet ist, die Platten (26, 28) exzentrisch auf der Welle (30) befestigt sind und zumindest eine der Platten (26, 28) oval ist.

2. Vereinzelungsvorrichtung (31) nach Anspruch 1, **dadurch gekennzeichnet, dass** zumindest eine der Platten (26, 28) kreisförmig ist.

3. Vereinzelungsvorrichtung (31) nach Anspruch 1 oder 2, **dadurch gekennzeichnet, dass** der Abstand (b) zwischen den Platten (26, 28) entlang der Welle (30) einstellbar ist.

4. Vereinzelungsvorrichtung (31) nach einem der Ansprüche 1 bis 3, **dadurch gekennzeichnet, dass** sie an mindestens einer Stirnseite (12.1, 12.2) eines Werkstücks (10.1-10.4), insbesondere einer Ladeleiste, anliegt und eingerichtet ist, das Werkstück (10.1-10.4), insbesondere die Ladeleiste, an der Stirnseite (12.1, 12.2) zu halten oder freizugeben.

5. Zufuhrvorrichtung zum Zuführen von in einem Stapel bereitgestellten Werkstücken (10.1-10.4), umfassend eine Vereinzelungsvorrichtung (31) nach einem der Ansprüche 1 bis 4 und eine Entnahmevorrichtung (32), wobei die Entnahmevorrichtung (32) eingerichtet ist, das äußerste Werkstück (10.1) zu halten, wenn die Vereinzelungsvorrichtung (31) in der Freigabeposition ist.

6. Zufuhrvorrichtung nach Anspruch 5, **dadurch gekennzeichnet, dass** die Entnahmevorrichtung (32) eine Schwenkachse (36) und einen Schwenkarm (34) zum Verschwenken zwischen einer Entnahmeposition und einer Beschickposition aufweist.

7. Zufuhrvorrichtung nach Anspruch 5 oder 6, **dadurch gekennzeichnet, dass** die Entnahmevorrichtung (32) einen motorischen Antrieb, bevorzugt einen Kurbeltrieb, zum Verschwenken des Schwenkarms (34) umfasst.

8. Zufuhrvorrichtung nach einem der Ansprüche 5 bis 7, **dadurch gekennzeichnet, dass** die Entnahmevorrichtung (32) ein Entnahmeelement (40), bevorzugt in der Form eines Saugers und/oder eines Greifers, aufweist.

9. Zufuhrvorrichtung nach einem der Ansprüche 5 bis 8, **dadurch gekennzeichnet, dass** die Entnahmevorrichtung (32) eine erste Linearführung und bevorzugt eine zweite Linearführung aufweist, wobei die erste Linearführung in einer Beschickungsrichtung (X) und bevorzugt die zweite Linearführung in einer im Wesentlichen senkrecht zur Beschickungsrichtung (X) verlaufenden Richtung (Y) verfahrbar ist.

10. Zufuhrvorrichtung nach einem der Ansprüche 5 bis 9, **dadurch gekennzeichnet, dass** sie eine Sensoreinrichtung aufweist, die zur Bestimmung einer Position des Werkstücks, insbesondere in einer Endposition, eingerichtet ist.

11. Verfahren zum Zuführen von in einem Stapel bereitgestellten Werkstücken (10.1-10.4) zu einem zu transportierenden Gegenstand (20, 22) unter Verwendung einer Zufuhrvorrichtung nach einem der Ansprüche 5 bis 10, wobei ein äußerstes Werkstück (10.1) des Stapels zunächst durch die Vereinzelungsvorrichtung (31) vereinzelt und das vereinzelte Werkstück (10.1) anschließend durch die Entnahmevorrichtung (32) gehalten wird.

12. Verfahren nach Anspruch 11, wobei das äußerste Werkstück (10.1) des Stapels durch Drehen der Vereinzelungsvorrichtung (31) zum ihre Welle (30) vereinzelt wird und der übrige Stapel durch die Vereinzelungsvorrichtung (31) gehalten wird.

13. Verfahren nach Anspruch 11 oder 12, wobei das vereinzelte Werkstück (10.1) von der Entnahmevorrichtung (32) in einer ersten Richtung (X) um eine erste Strecke verfahren wird und insbesondere in einer zweiten Richtung (Y) um eine zweite Strecke verfahren wird.

14. Verfahren nach einem der Ansprüche 11 bis 13, wobei die Entnahmevorrichtung (32) vor der Vereinzelung des äußersten Werkstücks (10.1) in eine Entnahmeposition zum Halten eines äußersten vereinzelten Werkstücks (10.1) verfahren wird.

15. Verfahren nach einem der Ansprüche 11 bis 14, wobei die Vereinzelungsvorrichtung (31) nach dem Vereinzeln des äußersten Werkstücks (10.1) weitergedreht wird, um die Eingriffposition der Vereinzelungsvorrichtung (31) wieder herzustellen.

## Claims

1. Separating device (31) for separating workpieces (10.1-10.4) provided in a stack, wherein the separating device has a shaft (30) aligned essentially parallel to the stacking direction (33) and two plates (26, 28) attached to the shaft (30) and spaced along the shaft (30), wherein the plates (26, 28) can be brought alternately to an engagement position and a release position by rotating the shaft (30), so that alternately the outermost (10.1) or the second workpiece (10.2) is held externally by one of the plates (26, 28) and accordingly the outermost workpiece (10.1) is alternately released or held, **characterised in that** the shaft is aligned at an angle (α) to the vertical which is different from zero, the plates (26, 28) are attached eccentrically on the shaft (30) and at least one of the plates (26, 28) is oval.

2. Separating device (31) according to claim 1, **characterised in that** at least one of the plates (26, 28) is circular.

3. Separating device (31) according to claim 1 or 2, **characterised in that** the distance (b) between the plates (26, 28) along the shaft (30) can be adjusted.

4. Separating device (31) according to one of claims 1 to 3, **characterised in that** at least at one end-face side (12.1, 12.2) of a workpiece (10.1-10.4), in particular a loading strip, it rests and is equipped to hold or to release the workpiece (10.1-10.4), in particular the loading strip, at the end-face side (12.1, 12.2).

5. Feed device for feeding workpieces (10.1-10.4) provided in a stack, comprising a separating device (31) according to one of claims 1 to 4 and a removal device (32), wherein the removal device (32) is equipped to hold the outermost workpiece (10.1) when the separating device (31) is in the release position.

6. Feed device according to claim 5, **characterised in that** the removal device (32) has a pivoting axis (36) and a pivoting arm (34) to pivot between a removal position and a loading position.

7. Feed device according to claim 5 or 6, **characterised in that** the removal device (32) comprises a motor drive, preferably a crank gear, to pivot the pivoting arm (34).

8. Feed device according to one of claims 5 to 7, **characterised in that** the removal device (32) has a removal element (40), preferably in the form of a suction apparatus and/or a gripping device.

9. Feed device according to one of claims 5 to 8, **characterised in that** the removal device (32) has a first linear guide and preferably a second linear guide, wherein the first linear guide can be moved in a loading direction (X) and preferably the second linear guide can be moved in a direction (Y) running essentially vertically to the loading direction (X).

10. Feed device according to one of claims 5 to 9, **characterised in that** it has a sensor device which is equipped to determine a position of the workpiece, in particular in an end position.

11. Method for feeding workpieces (10.1-10.4) provided in a stack to an object (20, 22) to be transported using a feed device according to one of claims 5 to 10, wherein an outermost workpiece (10.1) of the stack is separated first of all by the separating device (31) and the separated workpiece (10.1) is then held by the removal device (32).

12. Method according to claim 11, wherein the outermost workpiece (10.1) of the stack is separated by rotating the separating device (31) about its shaft (30) and the remaining stack is held by the separating device (31).

13. Method according to claim 11 or 12, wherein the separated workpiece (10.1) is moved by the removal device (32) in a first direction (X) by a first distance and is moved in particular in a second direction (Y) by a second distance.

14. Method according to one of claims 11 to 13, wherein before separating the outermost workpiece (10.1), the removal device (32) is moved to a removal position to hold an outermost separated workpiece (10.1).

15. Method according to one of claims 11 to 14, wherein after separating the outermost workpiece (10.1), the separating device (31) is rotated further to reestablish the engagement position of the separating device (31).

## Revendications

1. Dispositif de séparation (31), pour la séparation de pièces (10.1-10.4) disposées en pile, ledit dispositif de séparation comportant un axe (30) sensiblement parallèle à la direction d'empilement (33) et deux plaques (26, 28) fixées sur l'axe (30) et espacées le long de l'axe (30), lesdites plaques (26, 28) pouvant être mises en alternance dans une position d'engagement et une position de libération par rotation de l'axe (30), de telle manière que soit la pièce la plus à l'extérieure (10.1) soit la deuxième pièce de l'extérieure (10.2) est maintenue en alternance par une des plaques (26, 28), et que de cette façon la pièce la plus à extérieure (10.1) est libérée ou maintenue en alternance,
**caractérisé en ce que** l'axe est disposé suivant un angle (α) différent de zéro par rapport à la verticale, **en ce que** les plaques (26, 28) sont fixées de manière excentrée sur l'axe (30), et **en ce qu'**au moins une des plaques (26, 28) est ovale.

2. Dispositif de séparation (31) selon la revendication 1, **caractérisé en ce qu'**au moins une des plaques (26, 28) est circulaire.

3. Dispositif de séparation (31) selon la revendication 1 ou la revendication 2, **caractérisé en ce que** l'espacement (b) est réglable entre les plaques (26, 28) le long de l'axe (30).

4. Dispositif de séparation (31) selon l'une des revendications 1 à 3, **caractérisé en ce que** celui-ci repose contre au moins une face frontale (12.1, 12.2) d'une pièce (10.1-10.4), en particulier d'une baguette de charge, et est prévu pour maintenir ou libérer la pièce (10.1-10.4), en particulier la baguette de charge, sur la face frontale (12.1, 12.2).

5. Dispositif d'amenée pour l'amenée de pièces (10.1-10.4) disposées en pile, comprenant un dispositif de séparation (31) selon l'une des revendications 1 à 4 et un dispositif de prélèvement (32), ledit dispositif de prélèvement (32) étant prévu pour maintenir la pièce la plus à extérieure (10.1) lorsque le dispositif de séparation (31) est en position de libération.

6. Dispositif d'amenée selon la revendication 5, **caractérisé en ce que** le dispositif de prélèvement (32) comporte un axe de pivotement (36) et un bras pivotant (34) pour le pivotement entre une position de prélèvement et une position de chargement.

7. Dispositif d'amenée selon la revendication 5 ou la revendication 6, **caractérisé en ce que** le dispositif de prélèvement (32) comprend un entraînement motorisé, préférentiellement une transmission à came, pour le pivotement du bras pivotant (34).

8. Dispositif d'amenée selon l'une des revendications 5 à 7, **caractérisé en ce que** le dispositif de prélèvement (32) comporte un élément de prélèvement (40), préférentiellement sous la forme d'un aspirateur et/ou d'un grappin.

9. Dispositif d'amenée selon l'une des revendications 5 à 8, **caractérisé en ce que** le dispositif de prélèvement (32) comporte un premier guidage linéaire et préférentiellement un deuxième guidage linéaire, le premier guidage linéaire étant déplaçable dans une direction de chargement (X) et le deuxième guidage linéaire préférentiellement dans une direction (Y) s'étendant sensiblement perpendiculairement à la direction de chargement (X).

10. Dispositif d'amenée selon l'une des revendications 5 à 9, **caractérisé en ce que** celui-ci comporte un dispositif de capteur prévu pour la détermination d'une position de la pièce, en particulier d'une position finale.

11. Procédé d'amenée de pièces (10.1-10.4) disposées en pile vers un objet (20, 22) à transporter, recourant à un dispositif d'amenée selon l'une des revendications 5 à 10, où une pièce la plus à extérieure (10.1) de la pile est d'abord séparée par le dispositif de séparation (31) et où ladite pièce (10.1) séparée est ensuite maintenue par le dispositif de prélèvement (32).

12. Procédé selon la revendication 11, où la pièce la plus à extérieure (10.1) de la pile est séparée par rotation du dispositif de séparation (31) autour de son axe (30) et où le reste de la pile est maintenu par le dispositif de séparation (31).

13. Procédé selon la revendication 11 ou la revendication 12, où la pièce (10.1) séparée est déplacée par le dispositif de prélèvement (32) dans une première direction (X) suivant un premier trajet, et en particulier dans une deuxième direction (Y) suivant un deuxième trajet.

14. Procédé selon l'une des revendications 11 à 13, où le dispositif de prélèvement (32) est déplacé avant séparation de la pièce la plus à extérieure (10.1) dans une position de prélèvement pour le maintien d'une pièce la plus à extérieure (10.1) séparée.

15. Procédé selon l'une des revendications 11 à 14, où le dispositif de séparation (31) subit une nouvelle rotation après séparation de la pièce la plus à extérieure (10.1) pour rétablir la position d'engagement du dispositif de séparation (31).
